# EUROPEAN PATENT APPLICATION

(11) **EP 4 545 682 A1**
(43) Date of publication of application: **30.04.2025**
(21) Application number: 23205983.2
(22) Date of filing: 26.10.2023
(51) Int. Cl.: C25B 1/04, C25B 3/26, C25B 9/19, C25B 9/50, C25B 11/054, C25B 11/065, C25B 11/085

(54) **PHOTO-ELECTROCHEMICAL DEVICE**

(71) Applicant: Université Paris Cité, 75006 Paris (FR); Nantes Université, 44000 Nantes (FR); Centre National de la Recherche Scientifique, 75016 Paris (FR)
(72) Inventor: ROBERT, Marc, 75019 Paris (FR); ODOBEL, Fabrice, 44300 Nantes (FR); BARREAU, Nicolas, 44300 Nantes (FR)
(74) Representative: Demulsant, Xavier

(57) **Abstract**

Photoelectrode device for solar light driven CO₂ reduction with backside illumination, comprising a multilayer having a substrate transparent to incident light which forms the back side; a conductive transparent layer which is called the "back side", which is in contact with the substrate; a first layer of Cu(Inₓ,Ga_{y})S or an alloy of Cu(Inₓ,Ga_{y})Se_{w}S_{z} in contact with the conductive transparent layer, interface layers with a second layer forming with the first layer the photovoltaic junction to generate electrons; a metallic layer, in contact with the interface layers, to protect the first layer and the interface layers and to transport electrons, and which prevent light to pass through its thickness; a final layer, in contact with the metallic layer, which is called the front side, which is located at the end of the multilayer, and which is in contact with the electrolyte, the final layer presenting a molecular catalyst grafted or deposited on the layer, or a porous layer or nanomaterial hosting a molecular catalyst or a supramolecular catalyst or nanoparticles catalyst, such as catalytic inks deposited on the surface of the metallic layer; the photovoltaic junction formed by the first layer and the second layer being lit with light which comes only by the back side via the conductive transparent layer and having a size to generate electrons which are transported to the final layer via the metallic layer, to reduce species in solution.

## Description

### FIELD OF THE INVENTION

The invention generally relates to solar light driven reduction, such as CO₂ or other products, in particular in water or other solvents (such as anionic liquid, organic solvents).

The photo-electrochemical device can be used to realize the photoreduction of CO₂, as well as for the photoreduction of N₂ into NH₃, or the photoreduction of water into hydrogen.

### BACKGROUND OF THE INVENTION

Conversion of CO₂ to useful chemicals is an attractive technique for CO₂ capture and sequestration. The utilization of solar energy, especially visible light energy, provides a promising approach to solve the energy issue for CO₂ conversion. Among visible-light photocatalytic CO₂ conversion, three different processes have been considered in prior art, namely photocatalytic CO₂ reduction with water, photocatalytic CO₂ hydrogenation, and photocatalytic reforming of CO₂ and CH₄.

The invention generally relates to solar light photocatalytic reduction in water, such as CO₂ reduction, this kind of process attempting to mimic natural transformation of atmospheric CO₂ and water to chemical fuels using sunlight as the sole energy input, and being thus named artificial photosynthesis.

A review of artificial photosynthesis has been presented in July 2023 by Machin et al. (Artificial photosynthesis: current advancements and future prospects, doi: 10.3390/biomimetics8030298*).*

Artificial photosynthesis is a very important research area, because it represents one of the most credible solutions to reduce our dependence of fossil fuels and to produce storable chemical fuels or raw materials for chemical industry with a low carbon footprint.

Directly inspired from natural photosynthesis, which consists in activation of atmospheric CO₂ into biomass with sunlight, solar driven conversion of CO₂ into CO is certainly a valuable and key transformation for artificial photosynthesis.

Indeed, CO is strategic building block for chemical industry, since it can be transformed into virtually any liquid carbon-based hydrocarbons by d-metal catalyzed Fischer-Tropsch process or either into methanol by reduction or into acetic acid by Cativa-Monsanto process, for which the markets and the requisite infrastructures are already in place. CO is also used for purification of Nickel in the Mond process and the production of phosgene useful for preparing isocyanates, polycarbonates and polyurethanes.

Artificial photosynthesis is generally approached with photovoltaic cells to generate a sufficient photovoltage which is then supplied to an electrolyzer consisting of a cathode for the CO₂ reduction and an anode for the water oxidation. Proper electrocatalysts are employed on the two electrodes so as to expedite the reaction rate and improve the reaction selectivity. One of the first photocathode for photoelectrochemical (PEC) cell used for CO₂ reduction was p-type GaP reported in 1978 by Halmann et al. (Nature, 1978, 275, 115-116*).* Among various semiconductors, Si, InP, GaP, GaAs, attracted most of the efforts in prior art. The main product for the PEC CO₂ reduction in most nonaqueous solvents on p-Si, p-InP, p-GaAs, and p-GaP in various nonaqueous solvents was CO, with varying FE.

An example of an electrolytic device for solar light reduction of CO₂ is given in US 2015/0218719 (Panasonic, 2015) describing a carbon dioxide reduction device including a cathode chamber holding a first electrolyte solution that contains CO₂; an anode chamber holding a second electrolyte solution; a proton conducting membrane disposed in a connecting portion between these chambers; a cathode electrode and an anode electrode. The cathode electrode has a CO₂ reduction reaction region composed of a metal or a metal compound, and the anode electrode has a photochemical reaction region composed of nitride semiconductors. The photochemical reaction region of the anode electrode has a multilayer structure of a GaN layer and an AlₓGa₁₋ₓN layer containing Mg (0<x≦0.25). The anode electrode is disposed in such a manner that the AlₓGa₁₋ₓN layer can be exposed to light.

CN 107845848 (Univ Hebei, 2018) discloses a gallium-nitride-based device for artificial photosynthesis. The gallium-nitride-based device comprises a glass substrate, a molybdenum layer, a CIGS (Copper-Indium-Gallium-Selenide) layer, a CdS layer, an intrinsic ZnO layer, a TCO layer, a bonding interface layer, a GaN layer, an InGaN layer and an NiO nanoparticle layer from bottom to top. The gallium-nitride-based device can be used in the artificial photosynthesis as a photoanode material and plays a very important role in reducing carbon-dioxide emission.

EP 3868921 discloses electrodes for solar light driven CO₂ reduction in water, the electrodes comprising CuIn_{0.1}Ga_{0.9}Se₂ (CIGS) layers grown onto Mo-coated soda-lime glass substrates by co-evaporation from elemental sources. Mo back contact is deposited by DC-sputtering, with total thickness of 500 nm, the process used for CIGS deposition being known as CuPRO process (J. Kessler et al., Prog. Photovoltaics Res. Appl., 2003, 11, 319-331*),* which consists in keeping In and Ga fluxes constant and changing Cu flux such that nominal composition of the growing film undergoes Cu-poor/Cu-rich/Cu-poor transitions needed for high performance devices (N. Barreau et al., Acta Materialia, 2010, 58, 5572-5577*).* Co-qPyH catalyst is directly immobilized on the CIGS based photocathode. For that purpose, the surface of the CIGS is first protected by a dense layer of TiO₂ deposited by sputtering and the Co-qPyH catalyst is loaded by chemisorption.

The photocathode presented in EP 3868921 has some disadvantages and drawbacks, the photocathode presenting a front active surface loaded with the Co-qPyH catalyst for the photons.

Due to its exposure to light, the Co-qPyH catalyst is not stable over time and is degraded.

In addition, the electrolytic solution containing the photocathode and CO₂ has to be transparent to photons, especially in the wavelength absorption range of the CIGS (i.e., between 300 nm and 900 nm). The catalyst loaded on the active surface has also to be transparent to the photons in this wavelength range. Accordingly, these constraints limit the nature of the catalyst and the electrolytic solution to be used.

On the other hand, the light which arrives to the photovoltaic junction must pass through the electrolytic solution and a significant amount of the light's energy is lost in the solution.

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key of critical elements of the invention or to delineate the scope of the invention. Its sole purpose is to present some concepts in a simplified form as a prelude to the more detailed description that is discussed later.

### Invention

According to one aspect, a photo-electrochemical system is proposed to reduce species in solution, for instance to reduce CO₂ into CO or into a more reduced product (e.g., CH₃OH, HCHO, CH₄), or to reduce H₂O to H₂ or to reduce du N₂ to NH₃, the photo-electrochemical system comprising an electrochemical cell with:
- an anodic compartment with:
   - an anode with a current collector,
   - an anodic electrolyte solution comprising a solvent, and an anodic electrolyte;
- a cathodic compartment with:
   - a cathodic electrolyte solution comprising a solvent, and a cathodic electrolyte,
   - a channel for flowing the reagent gas, for instance CO₂,
   - a photo-electrocatalytic electrode in the cathodic electrolyte comprising a multilayer structure composed of a photovoltaic junction in charge of absorbing light and providing the energy necessary to trigger the photoelectrochemical reactions involving the reagent, the multilayer comprising:
      - a substrate transparent to incident light,
      - a conductive transparent layer, which is in contact with the substrate and which is connected to the anode through a wire, which is called with the substrate the "back side",
      - a first layer of Cu(Inₓ,Ga_{y})S or an alloy of Cu(Inₓ,Ga_{y})Se_{w}S_{z} in contact with the conductive transparent layer, x being comprised in between 0 and 1, and y = 1-x and w comprised in between 0 and 2 with z = 2-w,
      - interface layers with at least a second layer forming with the first layer the photovoltaic junction to separate electron-hole pairs,
      - a metallic layer, in contact with the interface layers, to protect the first layer and the interface layers and to transport electrons to a final layer having a catalyst, final layer which the metallic layer supports,
      - the final layer being called the front side, located at the end of the multilayer in contact with the electrolyte, and being :
         - a layer with a molecular or nanoparticles catalyst to reduce species, grafted on the layer, or deposited on the layer or filled in the layer or
         - a porous layer or nanostructured material hosting a molecular catalyst or a macromolecular catalyst or nanoparticles catalyst to reduce species, such as carbon-based film (powder, nanotubes....), for instance catalytic inks deposited on the surface of the metallic layer, to reduce species which is grafted or filled in pores or nanostructures,

the photovoltaic junction formed by the first layer and the second layer being lit with incident light which comes only by the back side throughout the conductive transparent layer, then passes throughout the first layer then throughout the second layer,
and the first layer having a thickness to release electrons in the second layer which are transported to the final layer via the metallic layer, to reduce species.

In other words, the source of the incident light, such as visible light or UV light, is positioned on the back side to illuminate the transparent substrate and the other layers by this side.

To the best of the knowledge of the inventors, there is no mention or suggestion in prior art of a catalytic photoelectrode for reduction illuminated on its back side coupled to a metal layer that allows both to protect the first layer and the interface layers and both to transport electrons to a final layer having a catalyst both, allowing any type of catalyst to be placed in any type of layer that adheres to the metal layer, in particular for CO₂ reduction.

The general knowledge of the person skilled in the art of the photo-electrochemical device is to illuminate from the front of the photo-electrochemical device and to have a multilayer transparent which is in the solution where there are the species to reduce, and to have this multilayer with a catalyst transparent to the incident layer and to have a electrolytic solution with the species to reduce transparent to the incident layer.

Other features of the photo-electrochemical system are presented in dependent claims.

In some embodiments, the thickness of the first layer of Cu(Inₓ,Ga_{y})S or an alloy of Cu(Inₓ,Ga_{y})Se_{w}S_{z} is between 400 nm and 600 nm, advantageously 500nm (+-50) nm.

Advantageously, the surface of the first layer of Cu(Inₓ,Ga_{y})S or an alloy of Cu(Inₓ,Ga_{y})Se_{w}S_{z} is smooth and presents a roughness of no more than 50 to 100 nm in thickness, to avoid creating short circuits between the front side and the back side.

In some embodiments, the first layer is realized in one step process, for instance by vacuum co-evaporation.

In some particular embodiments, the final layer presents:
- a carbon film (e.g., carbon powder, carbon nanotube) comprising a catalyst (molecule, nanoparticles), such as catalytic inks deposited on the surface of the metallic layer, or
- a carbon-based porous gas diffusion layer comprising a catalyst in some pores (molecule, nanoparticles),
- a supramolecular materials such as Metal Organic Framework (MOF), or Covalent Organic Framework (COF),
the catalyst being grafted or deposited on or in the carbon material in pores of the carbon-based porous gas diffusion material, or in the nanostructures of the supramolecular materials.

Advantageously, the material(s) of the final layer is (are) nanostructured. In some embodiments, the final layer presents a catalyst for reducing CO₂ into CO or into more reduced products which are CH₃OH, HCHO, CH₄, or for reducing H₂O to H₂,

In some embodiments, the interface layers present a second layer having material selected in the group comprising: CdS, or ZnS, or or ZnO or ZnMgO, and being in contact with the first layer, the first layer and the second layer forming the photovoltaic junction.

Advantageously, the photo-electrocatalytic electrode is disposed near or in contact with the walls of the cathodic compartment, to limit the passage of the light in the solution.

In some embodiments, the interface layers present an intermediate layer: ZnO, or ZnMgO between the second layer and the metallic layer.

The ZnMgO can be used for both the photovoltaic junction and the intermediate layer.

In various embodiments, the conductive transparent layer is a transparent conductive oxide (e.g., ITO, FTO, AZO) or oxide/metal network/oxide structures (e.g., with Cu or Ag as metal).

Advantageously, a channel for flowing the reagent gas is situated to diffuse directly the reagent gas through the final layer which is porous. Advantageously, the solvent is water.

According to another aspect, it is proposed a method for realizing the photo-electrochemical system as presented above, the method comprising the following steps:
- clean a substrate coated with a conductive transparent layer which is called the "back side", which is in contact with the substrate and which is connected to the anode through a wire, for instance by oxidizing solution consisting of a mixture of ammonia (1M) and hydrogen peroxide (H₂O₂ at 30%) in volume proportions 80/20, the layer being immersed for 10 min in the mixture heated to 75°C,
- cover the coated substrate with a first layer of Cu(Inₓ,Ga_{y})S or an alloy of Cu(Inₓ,Ga_{y})Se_{w}S_{z} in contact with the conductive transparent layer, x being comprised in between 0 and 1, and y = 1-x and w comprised in between 0 and 2 with z = 2-w,
- cover the first layer with a second layer to form the pn junction,
- cover with an interface layer which is for instance a transparent oxide layer,
- cover the interface layer with a metallic layer,
- cover the metallic layer with a final layer to electrochemically reduce species, which is called the front side, which is located at the end of the multilayer, and which is in contact with the electrolyte, the final layer presenting:
- a molecular catalyst grafted on the final layer, or
- a porous layer or nanostructured porous material hosting a molecular catalyst or supramolecular catalyst or nanoparticles catalyst grafted or filled in pores of the porous layer/material.

Other features of the method are presented in dependent claims.

Advantageously, the covering of the coated substrate with a thin layer of Cu(Inₓ,Ga_{y})S or an alloy of Cu(Inₓ,Ga_{y})Se_{w}S_{z} is realized in a two-step process, the metallic elements that the CIGS material contains is provided in the form of successive layers (stacked elemental layers), for example Cu/ln/Ga, and for instance being produced physically under vacuum (e.g., cathode sputtering) or wetly (e.g., electro-deposition), and then heated (i.e., rapid thermal treatments) under a sulfur atmosphere (e.g., H₂S flow) to form CIGS crystals.

Advantageously, specific heating profiles or the presence of additives (e.g., a little silver) make it possible to avoid the accumulation of gallium on the rear contact side in the case of thick layers.

In some embodiments, the covering of the coated substrate with a thin layer of Cu(Inₓ,Ga_{y})S or an alloy of Cu(Inₓ,Ga_{y})Se_{w}S_{z} is in a one-step process, the crystallized compound CIGS is formed by a co-evaporation under vacuum, allowing to generate a smooth surface of the first layer (3) of Cu(Inₓ,Ga_{y})S or an alloy of Cu(Inₓ,Ga_{y})Se_{w}S_{z} which presents a roughness of no more than 50 to 100 nm in thickness.

Advantageously, the final layer is in an ink with a catalyst and which is filled by inkjet coating on the metallic layer, and for instance presents a catalyst for reducing CO₂ into CO or into a more reduced product, or for reducing H₂O to H₂.

According to another aspect, it is proposed the use of the photo-electrochemical system as defined above or in the appended claims to reduce CO₂ into CO or H₂O to H₂, with a photovoltaic junction only lighted from the back side.

### BRIEF DESCRIPTION OF THE DRAWINGS

The objects, advantages and other features of the present invention will become more apparent from the following disclosure and claims. The following non-restrictive description of preferred embodiments is given for the purpose of exemplification only with reference to the accompanying drawings in which:
- figure 1 is an illustration from SEM picture of a multi-layered structure of a bifacial CIGS photocathode for solar light driven CO₂ reduction, the presence of a glass layer and interface layers being highlighted;
- figure 2 is an image showing visual aspect of substrate structure of a bifacial CIGS photocathode for solar light driven CO₂ reduction, the substrate comprising several metallic squared parts, each corresponding to a photocathode, the area illuminated during current density measurement being highlighted;
- figure 3 is a linear sweep voltammetry of a photoelectrode comprising SLG (soda-lime glass) transparent substrate, multi-walled carbon nanotube MWCNT loaded with cobalt catalyst, the multilayer structure of the photoelectrode being SLG/ITO/CIGS/ZnOS/TCO/Ni:AI:Ni/MWCNT-Coqtp, conditions being 0.1 M KHCO₃, 5mV/s, 0.72 cm² surface area, water medium (pH=7.4) saturated with CO₂, catalyst loading of 6.3 nmol/cm², light irradiation (1 sun), the photoelectrode being illuminated on the backside;
- figure 4 is a photocurrent trace versus time obtained during photoelectrocatalysis at a controlled potential (bias) of -0.7 V vs. SCE. The photoelectrode used in this experiment comprises SLG (soda-lime glass) transparent substrate, multi-walled carbon nanotube MWCNT loaded with cobalt catalyst, the multilayer structure of the photoelectrode being SLG/ITO/CIGS/ZnOS/TCO/Ni:AI:Ni/MWCNT-Coqtp, conditions being 0.1 M KHCOs, E = -0.7 V vs. SCE, 0.72 cm² surface area, water layer (pH=7.4) saturated with CO₂, catalyst loading of 6.3 nmol/cm², light irradiation (1 sun);
- figure 5 is a schematic diagram representing a photoelectrode according to the present invention, illuminated from the backside;

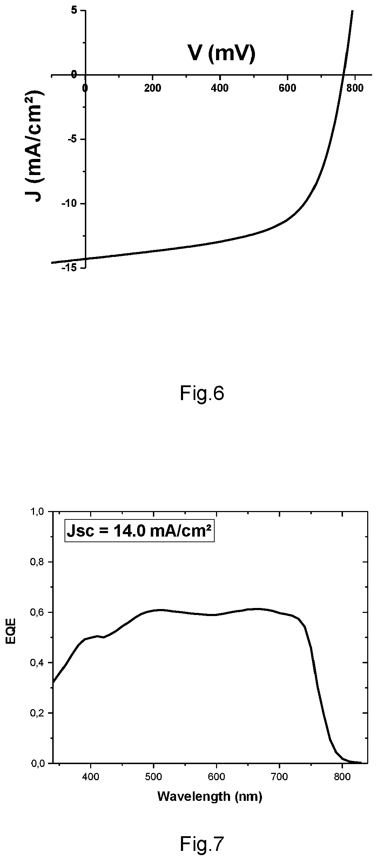

- figure 6 is a typical current voltage characteristic obtained by rear side illumination of a photoelectrode according to the present invention, this curve defining a current for short circuit condition J_{sc} (for applied bias V=0), and the voltage at open circuit condition V_{oc} (for current density J=0);
- figure 7 is a typical external quantum yield (EQE external quantum efficiency) obtained by backside illumination of a device according to the invention;
- figure 8 is a graph showing backside illumination quantum yields (external quantum efficiency) EQE for different CIGS thicknesses in nm;
- figure 9 is a schematic diagram corresponding to figure 5, showing the Energy band diagram in the CIGS and CdS layer of a multilayered photoelectrode;
- figure 10 is a graph showing the voltage at open circuit condition V_{oc} for photoelectrodes according to the present invention, absorber thickness being between 300 nm and 1500 nm, using front illumination or back illumination of the photoelectrode;
- figure 11 is a graph showing the current for short circuit condition J_{sc} for photoelectrodes according to the present invention, absorber thickness being between 300 nm and 1500 nm, using front illumination or back illumination.

### Covering substrate with CIGS

Several techniques can be implemented to synthesize thin layers of Cu(In,Ga)S₂, on glass/TCO.

In a two-step process, the metallic elements that the CIGS material will contain are provided in the form of successive layers (stacked elemental layers), for example Cu/ln/Ga.

These metal stacks can be produced physically under vacuum (cathode sputtering) or wetly (electro-deposition). The stacks are then heated (i.e., rapid thermal treatment) under a sulphur atmosphere (e.g., H₂S flow or sulphur partial pressure) to form CIGS crystals.

In a one-step process, the crystallized compound CIGS is formed during the elements supply phase, e.g., using co-evaporation under vacuum.

Advantageously, in the photocathode, layers of CIGS do not exceed 500 nm; this thickness being of the same order of magnitude as the roughness of the layers of CIGS obtained by the 'two-step process', which generates a significant density of short-circuit points.

Advantageously, a one-step process is used for covering the glass substrate with CIGS, the thickness of the CIGS layer being between 400 nm and 600 nm, and more advantageously around 500 nm.

Advantageously, the roughness (i.e., depth of cracks at the grain boundaries) does not exceed 50 nm to 100 nm, to avoid the creation of a short circuit between the front and rear contacts.

Advantageously, the distribution of gallium across the CIGS layers is homogeneous.

In some embodiments, specific heating profiles during annealing or the presence of additives (e.g., a little silver) make it possible to avoid the accumulation of gallium on the rear contact side in the case of thick layers.

### Multilayer structure of a photoelectrode

The glass substrate 1 coated with a TCO layer 2 (e.g., ITO) is cleaned using an oxidizing solution, consisting of a mixture of ammonia (1 M) and hydrogen peroxide (H₂O₂, 30%), volume proportions being 80/20. Cleaning time is for example 10 minutes, the oxidizing solution being at a temperature of 75 °C.

The cleaned glass substrate is covered with a thin layer of Cu(In,Ga)S₂ (CIGS), the CIGS layer 3 having a thickness of around 500 nm, using vacuum co-evaporation.

The CIGS layer 3 is then covered with a so-called buffer layer 4, forming the p-n junction for the separation of the photogenerated charge carriers under illumination.

In some embodiments, the buffer layer 4 comprises CdS. In other embodiments, the buffer layer 4 comprises ZnOS. The buffer layer 4 is for instance deposited using chemical bath.

The obtained stack is covered with a transparent oxide 5, for instance ZnO or ZnMgO.

The stack covered by the transparent oxide 5 is then covered by a metallic layer 6, for instance a stack of Ni/AI/Ni or other material with carbon, the presence of Ni layer being advantageous, avoiding oxidation of the aluminium layer.

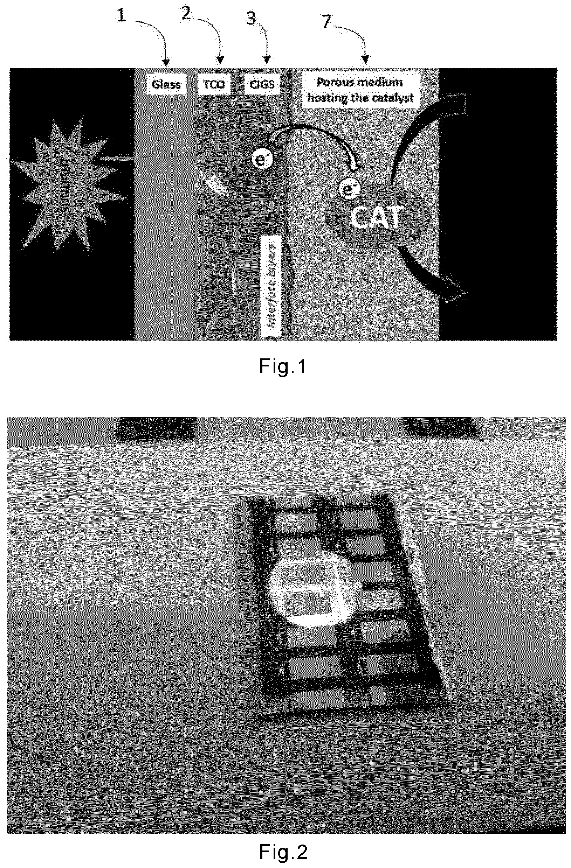

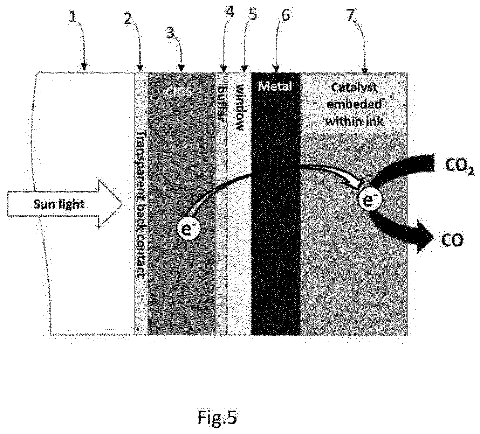

The obtained structure illuminated by its rear surface or panel (i.e., the glass substrate side) is illustrated on figure 1 or 5.

The characterization of such a structure during illumination from the rear side makes it possible to achieve efficiencies greater than 6%.

It is thus possible to achieve current densities greater than 10 mA/cm² of illuminated substrate.

Figure 2 shows the area illuminated during the measurement. Several metallic squared parts are visible on figure 2, each corresponding to a photoelectrode (photocathode).

The catalyst 7 or its support can then be grafted or deposited onto the metal part 6 of the photoelectrode.

In some embodiments, catalytic inks were prepared from carbon nanotubes mixed with molecular catalysts (MWCNT). The ink is then deposited on the surface of the photoelectrode, for instance by drop casting, spin coating, or ink jet printing. The ink jet printing allows to have controlled deposits and to have reproducible deposits.

One method for preparing catalytic inks has been presented by one of the present inventors, see Robert (A Hybrid Co Quaterpyridine Complex/Carbon Nanotube Catalytic Material for CO2 Reduction in Water, Angew. Chem. Int. Ed. 2018,57,7769-7773*),* see also documents WO2021/013530, US20220251715, WO2020/216946, US20220228274.

In the following example, the catalyst is a cobalt complex, a very good catalyst for the reduction of CO₂ to CO using conventional conductive electrodes.

Cobalt quaterpyridine used as a catalyst on the front surface of the photoelectrode is as follows:

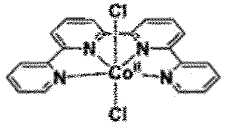

0.13 mg of cobalt quaterpyridine, along with 2.53 mg of multi-walled carbon nanotubes (MWCNT) were added to a beaker containing 5 mL of 1:1 ethylene glycol/ethanol.

The ink was stirred under ultrasound for 30 minutes.

75 µL of 5% Nafion solution were added and the entire mixture was stirred for 24 hours before the ink was deposited on the front side of the photoelectrode by deposition of a drop and evaporation of the solvent.

The concentration of the catalyst can be controlled by adjusting the quantity of ink deposited.

In the experiments carried out, the surface concentration of catalyst was varied between 6.3 nmol and 17.7 nmol per cm² of electrode.

The photoelectrodes are then soaked in aqueous solution and subjected to a period of light irradiation for 1 to 2 hours under 1 sun light in order to obtain maximum efficiency.

Many other molecular catalysts can be used.

For instance, the molecular catalyst being chosen between the list comprising:
- metal porphyrin with one or several +N(C1 -C4 alkyl)3 groups, with the metal chosen among: Iron, Cobalt;
- metal phthalocyanine, with the metal chosen among: Iron, Cobalt;
- metal phthalocyanine with the metal chosen among: Iron, Cobalt, with one or several groups among: +N(C1 -C4 alkyl)3 , F, C(CH3)3 , or cobalt quaterpyridine, for instance a cobalt complex with the planar tetradentate ligand 2,2':6',2":6",2‴-quaterpyridine (Co-qPyH).

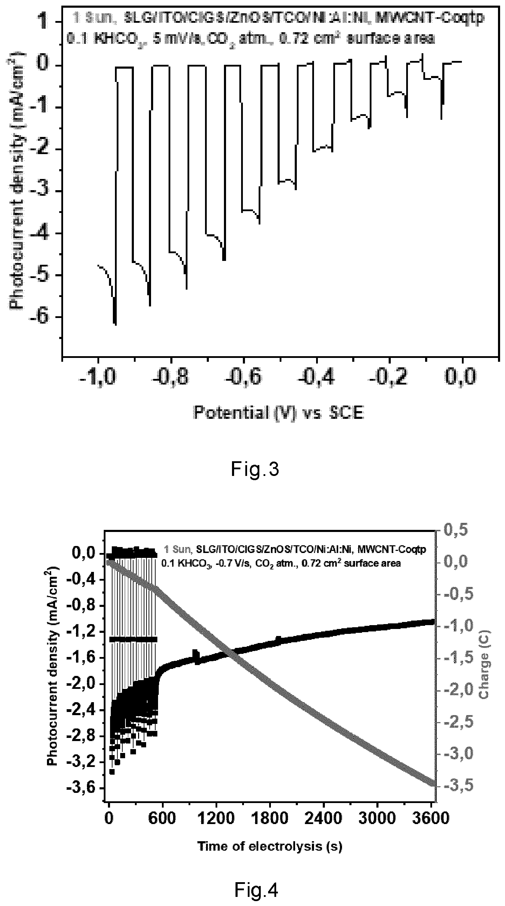

Figure 3 shows the obtained performance for a catalyst loading of 6.3 nmol/cm², under light irradiation (1 sun) in water at pH 7.4, using discontinuous irradiation of the photoelectrode at different applied potentials (bias potential).

Figure 3 illustrates the ability to generate very strong CO₂ reduction currents, even at extremely low negative potentials.

The solution into which the electrode is immersed is saturated with CO₂, and the obtained currents correspond to the simultaneous reduction of CO₂ to CO and water to dihydrogen.

For E = - 0.22 V vs RHE (corresponding to -0.9 V vs. SCE in the figure), a current of 5 mA/cm² is obtained, which corresponds to approximately 36% of the maximum current that the photoelectrode can deliver.

Such extraction of charges at the interface with the solution for catalysis is well beyond the state of the art for photoelectrodes.

At the positive potential of + 0.48 V vs. RHE, a reduction current of 1 mA/cm² is obtained, which is exceptional.

Electrolysis at controlled potential for 1 hour with E = - 0.02 V vs. RHE then made it possible to confirm that the catalysis actually takes place in solution, at the interface with the electrode (Figure 4).

During this electrolysis, an average current of approximately - 1.5 mA/cm² was obtained, with an efficiency of 40% for the reduction of CO₂ to CO and 60% for the reduction of water to dihydrogen H₂, both products being the only ones obtained, and quantified by gas chromatography.

Upon depositing the catalytic ink by inkjet coating, selectivity for CO production was raised to 80% selectivity.

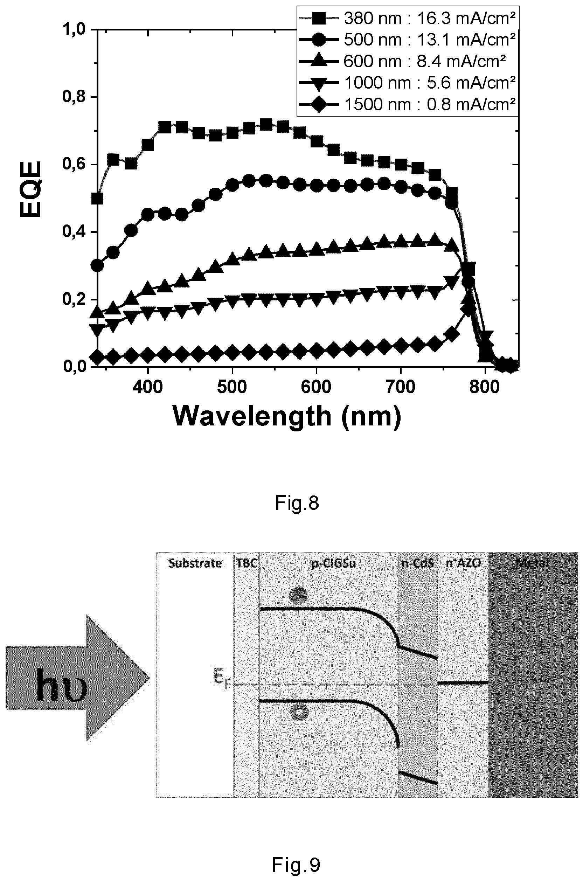

As represented on figure 9, the lower the wavelength of the photons, the greater the probability that they will generate an electron-hole pair, so short-wavelength photons are absorbed within the first few nanometers of the CIGS they encounter.

To separate and collect these electrons, they must be able to reach the space charge region (around 400 nm in CIGS from CdS). If the CIGS layer 3 is thick, then many electron-hole pairs generated close to the back contact have no chance of being collected because they are generated too far from the space charge region.

If the CIGS layer 3 is thin, there is a better chance of collecting these electrons. However, if the CIGS layer 3 is too thin, the open circuit voltage (V_{oc}) will decrease because the space charge region will be in contact with the rear contact (no sufficient Fermi level splitting).

Advantageously, the thickness of the CIGS layer 3 is between 400 nm and 600 nm.

Advantageously, the thickness of the final layer 7 is between a few tens of nanometres and a few microns, for instance 50 nm to 300 nm, 300 nm and 600 nm, 600 nm and 1 micrometer, 1 micrometer-6 micrometers, depending on applications.

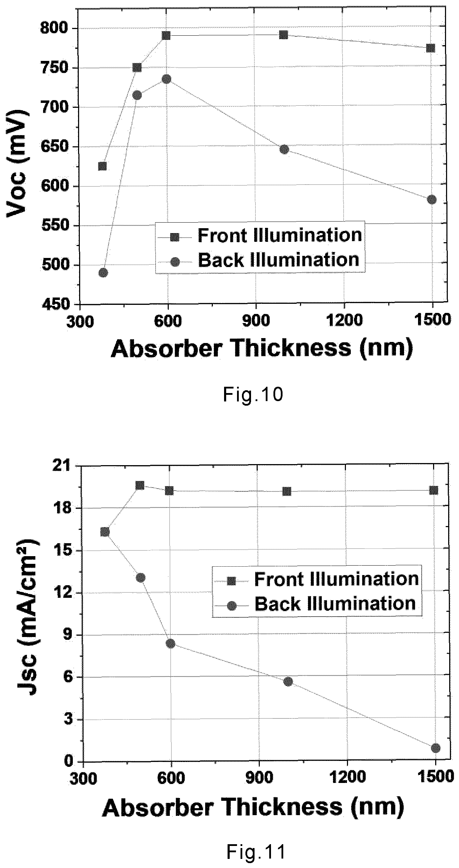

This can be deduced by combining the results presented in figures 10 and 11. Indeed, the output power of the photocathode is proportional to the product of the Voc and Jsc, which herein corresponds to a trade-off between output voltage and current density. As can be seen in figure 10 and 11, for back illumination the optimum corresponds to a CIGS whose thickness is ranging between 400 nm and 600 nm.

The present invention has many advantages.

The present invention enables for instance photoreduction of CO₂ into CO and various molecules (methanol, methane, ethanol), or the photoreduction of N₂ to NH₃, or the photoreduction of water to hydrogen. The present invention proposes to use, as rear contact of the photo-electrode, a Mo substituent which is transparent to solar photons. This substituent can be a material/stack that is both transparent and conductive, e.g., a thin layer of indium tin oxide (i.e., ITO) deposited on a glass substrate.

This new architecture therefore makes it possible to completely cover the front surface of the photo-electrode with a metallic layer, supporting any substance containing the catalyst and to be immersed in any CO₂ vector medium.

In addition, a greatly improved lifespan of the device is obtained because the metal layer covering the front surface of the photoelectrode can also act as a protective layer for the latter.

The metal layer can have for instance a thickness between 50 nm and 3 micrometres.

Finally, this architecture by rear-panel illumination offers prospects for extended reactions, for example, to prepare carbon-based catalytic inks and deposit on conventional conductive electrodes, or to implement original 2D or 3D (nano)structuring of catalysts, or to implement other porous layers containing an appropriate catalyst, allowing for the delivery of the CO₂ or other reagent gas, under a gaseous form, for instance directly in the porous layers to be reduced, preventing the reagent gas for passing through the electrolyte solution.

The photoelectrodes are able to reduce CO₂ in water, with a catalytic ink containing a molecular catalyst mixed with carbon nanotubes deposited (MWCNT) on the front surface of the photoelectrode.

Within the stack of thin layers constituting the photoelectrode, the material forming the rear contact of the photoelectrode is both transparent and conductive.

The material can be a transparent conductive oxide (ITO or FTO type) or an oxide/metal/oxide type stack.

The resulting photoelectrode offers the possibility of being illuminated from its rear panel, which is opposite to the pn junction side.

The photogenerated electrons are therefore always available on the front surface of the photoelectrode, and can be collected using a metallic layer covering the entire device, the transparency of the front side no longer being a prerequisite.

Any type of support material for CO₂ reduction catalysts can be deposited on this metal surface and the assembly forming the photocathode can be immersed in all CO₂ vector media, in particular water or other solvents. While the invention is susceptible to various modification and alternative forms, specific embodiments thereof have been shown by way of example in the drawings. It should be understood, however, that the description herein of specific embodiments is not intended to limit the invention to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

## Claims

1. A photo-electrochemical system to reduce species, for instance to reduce CO₂ into CO or into more reduced products, or for instance to reduce H₂O to H₂ or to reduce N₂ to NH₃,
comprising an electrochemical cell with:
- an anodic compartment with:
• an anode with a current collector,
• an anodic electrolyte solution comprising a solvent, and an anodic electrolyte,
- a cathodic compartment with:
• a cathodic electrolyte solution comprising a solvent, and a cathodic electrolyte,
• a channel for flowing the reagent gas, for instance CO₂,
• a photo-electrocatalytic electrode in the cathodic electrolyte, comprising a multilayer structure composed of a photovoltaic junction in charge of absorbing light and providing the energy necessary to trigger the photoelectrochemical reactions involving the reagent,
the multilayer comprising:
- a substrate (1) transparent to incident light,
- a conductive transparent layer (2) which is in contact with the substrate (1) and which is connected to the anode through a wire, which is called with the substrate (1) the "back side",
- a first layer (3) of Cu(Inₓ,Ga_{y})S or an alloy of Cu(Inₓ,Ga_{y})Se_{w}S_{z} in contact with the conductive transparent layer (2), x being comprised in between 0 and 1, and y = 1-x and w comprised in between 0 and 2 with z = 2-w,
- interface layers with at least a second layer (4) forming with the first layer (3) the photovoltaic junction to separate electron-hole pairs,
- a metallic layer (6), in contact with the interface layers, to protect the first layer (3) and the interface layers, to transport electrons to a final layer (7) having a catalyst, final layer (7) which the metallic layer (6) supports,
- the final layer (7), being called the front side, located at the end of the multilayer, in contact with the electrolyte, and being :
- a layer with a molecular or nanoparticles catalyst to reduce species, grafted on the layer or deposited on the layer or filled in the layer, or
- a porous layer or nanostructured material hosting a molecular catalyst or a macromolecular catalyst or nanoparticles catalyst to reduce species, which is grafted or filled in pores or nanostructures,
the photovoltaic junction formed by the first layer (3) and the second layer (4) being lit with incident light which comes only by the back side throughout the conductive transparent layer (2), then passes throughout the first layer (3) then throughout the second layer (4),
and the first layer (3) having a thickness to release electrons in the second layer (4) which are transported to the final layer (7) via the metallic layer (6), to reduce species.

2. The photo-electrochemical system according to claim 1, wherein the thickness of the first layer (3) of Cu(Inₓ,Ga_{y})S or an alloy of Cu(Inₓ,Ga_{y})Se_{w}S_{z} is between 400 nm and 600 nm, advantageously 500nm (±50) nm.

3. The photo-electrochemical system according to claims 1 or 2, wherein the surface of the first layer (3) of Cu(Inₓ,Ga_{y})S or an alloy of Cu(Inₓ,Ga_{y})Se_{w}S_{z} is smooth and presents a roughness of no more than 50 to 100 nm in thickness, to avoid creating short circuits between the front side and the back side.

4. The photo-electrochemical system according to any of claims 1 to 3, wherein the first layer (3) is realized in one step process, for instance by vacuum co-evaporation.

5. The photo-electrochemical system according to any of claims 1 to 4, wherein the material(s) of the final layer (7) is (are) nanostructured.

6. The photo-electrochemical system according to any of claims 1 to 5, wherein the final layer (7) presents:
- a carbon film comprising a catalyst, such as catalytic inks deposited on the surface of the metallic layer (6), or
- a carbon-based porous gas diffusion layer comprising a catalyst in some pores,
- a supramolecular material such as Metal Organic Framework, or Covalent Organic Framework,
the catalyst being grafted or deposited on or in the carbon film or in pores of the carbon-based porous gas diffusion layer, or in nanostructures of the supramolecular materials.

7. The photo-electrochemical system according to any of claims 1 to 6, wherein the final layer (7) presents a catalyst for reducing CO₂ into CO or into more reduced products which are CH₃OH, HCHO, CH₄, or for reducing H₂O to H₂,

8. The photo-electrochemical system according to any of claims 1 to 7, wherein the interface layers present a second layer (4) having material selected in the group comprising: CdS, or ZnS, or ZnO, or ZnMgO, and being in contact with the first layer (3), the first layer (3) and the second layer (4) forming the photovoltaic junction.

9. The photo-electrochemical system according to any of claims 1 to 8, wherein the photo-electrocatalytic electrode is disposed near or in contact with the walls of the cathodic compartment, to limit the passage of the light in the solution.

10. The photo-electrochemical system according to any of claims 1 to 9, wherein the interface layers present an intermediate layer (5): ZnO, or ZnMgO between the second layer (4) and the metallic layer (6).

11. The photo-electrochemical system according to any of claims 1 to 10, wherein the conductive transparent layer (2) is a transparent conductive oxide or oxide/metal network/oxide structures.

12. The photo-electrochemical system according to any of claims 1 to 11, wherein a channel for flowing the reagent gas is situated to diffuse directly the reagent gas through the final layer (7) which is porous.

13. The photo-electrochemical system according to any of claims 1 to 12, wherein the solvent being water.

14. Method for realizing the photo-electrochemical system according to any of claims 1 to 13,
the method comprising the following steps:
- clean a substrate (1) coated with a conductive transparent layer (2) which is called the "back side", which is in contact with the substrate (1) and which is connected to the anode through a wire,
- cover the coated substrate with a first layer (3) of Cu(Inₓ,Ga_{y})S or an alloy of Cu(Inₓ,Ga_{y})Se_{w}S_{z} in contact with the conductive transparent layer (2), x being comprised in between 0 and 1, and y = 1-x and w comprised in between 0 and 2 with z = 2-w,
- cover the first layer (3) with a second layer (4) to form the PN junction,
- cover with an interface layer (5), which is for instance a transparent oxide layer,
- cover the interface layer (5) with a metallic layer (6),
- cover the metallic layer (6) with a final layer (7) to electrochemically reduce species, which is called the front side, which is located at the end of the multilayer, and which is in contact with the electrolyte, the final layer (7) presenting:
- a molecular catalyst grafted or deposited on the final layer (7), or
- a porous layer or nanostructured porous material hosting a molecular catalyst or supramolecular catalyst or nanoparticles catalyst grafted or filled in pores of the porous layer/material.

15. Method for realizing the photo-electrochemical system according to claim 14, wherein the covering of the coated substrate with a thin layer of Cu(Inₓ,Ga_{y})S or an alloy of Cu(Inₓ,Ga_{y})Se_{w}S_{z} is realized in a two-step process, the metallic elements that the CIGS material contains is provided in the form of successive layers, for example Cu/ln/Ga, and for instance being produced physically under vacuum or wetly, and then heated under a sulfur atmosphere to form CIGS crystals.

16. Method for realizing the photo-electrochemical system according to claim 15, wherein specific heating profiles or the presence of additives make it possible to avoid the accumulation of gallium on the rear contact side in the case of thick layers.

17. Method for realizing the photo-electrochemical system according to claim 14, wherein the covering of the coated substrate with a thin layer of Cu(Inₓ,Ga_{y})S or an alloy of Cu(Inₓ,Ga_{y})Se_{w}S_{z} is in a one-step process, the crystallized compound CIGS is formed by a co-evaporation under vacuum, allowing to generate a smooth surface of the first layer (3) of Cu(Inₓ,Ga_{y})S or an alloy of Cu(Inₓ,Ga_{y})Se_{w}S_{z}, which presents a roughness of no more than 50 to 100 nm in thickness.

18. Method for realizing the photo-electrochemical system according to any of claim 14 to 17, wherein the final layer (7) is in an ink with a catalyst and which is filled by inkjet coating on the metallic layer (6), and for instance presents a catalyst for reducing CO₂ into CO or into a more reduced product, or for reducing H₂O to H₂.

19. Use of the photo-electrochemical system as defined in any of claims 1 to 13, for instance to reduce CO₂ into CO or H₂O to H₂, with a photovoltaic junction only lighted from the back side.
